# EUROPÄISCHE PATENTSCHRIFT

(11) **EP 2 386 825 B1**
(45) Veröffentlichungstag und Bekanntmachung des Hinweises auf die Patenterteilung: **04.07.2018**
(21) Anmeldenummer: 11003701.7
(22) Anmeldetag: 05.05.2011
(51) Int. Cl.: G01C 9/32

(54) **Libelle für Wasserwaage**
Level indicator for spirit level
Niveau pour niveau à bulles

(30) Priorität: 10.05.2010 AT 7852010
(43) Veröffentlichungstag der Anmeldung: 16.11.2011
(73) Patentinhaber: SOLA-Messwerkzeuge GmbH, 6840 Götzis (AT)
(72) Erfinder: Scheyer, Wolfgang, 6840 Götzis (AT); Zwing, Lukas, 6850 Dornbirn (AT)
(74) Vertreter: Torggler & Hofinger Patentanwälte

(56) Entgegenhaltungen:
- WO-A1-2008/107868
- WO-A1-2010/067371
- US-A- 1 898 367
- US-A1- 2005 229 413
- US-A1- 2007 246 116

## Beschreibung

Die Erfindung betrifft eine Wasserwaage mit den Merkmalen des Oberbegriffs des Anspruchs 1.

Derartige Wasserwaagen sind bereits in einer Vielzahl aus dem Stande der Technik heraus bekannt.

Durch verschiedene Maßnahmen wurde versucht, die Ablesbarkeit der Libellen zu verbessern. So lehrt die WO 2005/103614 A2 (Empire Level) eine Libelle mit zwei Markierungsringen, die zwischen sich den ersten Bereich einschließen. Zur besseren Erkennbarkeit des Markierkörpers zwischen den Markierungsringen ist zwischen jedem Markierungsring und dem jeweiligen Libellenende ein dunkles Band angeordnet. Durch Reflexion der dunklen Bänder am Markierkörper lässt sich die Position des Markierkörpers in Bezug auf die Markierungsringe leichter ablesen.

Die prioritätsältere, nachveröffentlichte WO 2010/067371 A1 zeigt eine Wasserwaage mit einer Libelle mit einem zweiten und dritten abgedunkelten Bereich, wobei Markierungsringe vorgesehen sind.

Aufgabe der Erfindung ist es, eine gegenüber dem Stand der Technik verbesserte Wasserwaage anzugeben.

Diese Aufgabe wird durch eine Wasserwaage mit den Merkmalen des Anspruchs 1 gelöst.

Dadurch, dass einer der beiden Bereiche abgedunkelt ausgebildet ist, ist es für den Betrachter leichter erkennbar, ob sich der Markierkörper der Libelle gänzlich im ersten Bereich befindet und somit sich die Libelle im nivellierten Zustand befindet.

"Abgedunkelt" ist dabei so zu verstehen, dass der entsprechende Bereich nicht vollständig durchsichtig ist. Dieser abgedunkelte Bereich könnte also das Licht teilweise durchlassen, ebenso könnte er auch opak ausgebildet sein. Weiters wäre es auch vorstellbar, dass das Abdunkeln nicht vollflächig erfolgt, sondern dass eine Vielzahl von einzelnen Farbpunkten angeordnet werden und damit die Sicht auf das Innere der Libelle in diesem Bereich behindern.

Der Betrachter wird durch den abgedunkelten Bereich dazu veranlasst - genau genommen sogar dazu gezwungen - die Libelle genau auszunivellieren, um sicherzustellen, dass sich der Markierkörper gänzlich im ersten Bereich befindet. Somit kann die Ablesegenauigkeit erhöht werden, da auch eine parallaxe Fehlablesung für den Betrachter unmittelbar erkennbar ist und er umgehend darauf reagieren kann. Die Verwendung wenigstens eines Bereiches, der relativ zu einem anderen Bereich der Libelle abgedunkelt ist, ist im Vergleich zum Stand der Technik ein völlig neuartiges Konzept, da es im Stand der Technik immer darauf ankam, die Erkennbarkeit des Markierkörpers relativ zu den Markierungsringen zu verbessern. Bei der Erfindung hingegen sind Markierungsringe nicht einmal mehr erforderlich, obwohl die Anordnung von an sich unnötigen Markierungsringen nicht aus dem Schutzbereich führen soll.

Weitere vorteilhafte Ausführungsformen der Erfindung sind in den abhängigen Ansprüchen definiert.

Es ist vorgesehen, dass der zweite Bereich eine Breite aufweist, die zumindest einem Viertel - insbesondere einem Drittel - der Breite des ersten Bereiches entspricht.

Als besonders vorteilhaft hat es sich herausgestellt, wenn der abgedunkelte Bereich transluzent - partiell lichtdurchlässig - ausgebildet ist, somit ist der Markierkörper auch noch erkennbar, wenn sich dieser im abgedunkelten Bereich befindet. Natürlich könnte der abgedunkelte Bereich aber auch lichtundurchlässig ausgebildet sein.

Es ist vorgesehen, dass die Libelle einen dritten Bereich aufweist, wobei der dritte Bereich unmittelbar an den ersten Bereich angrenzt und eine Breite aufweist, die zumindest einem Viertel - insbesondere einem Drittel - der Breite des ersten Bereiches entspricht. Somit kann die bevorzugte Ablesung der Libelle an beiden Seiten des ersten Bereiches der Libelle - wenn diese z.B. als Röhren- oder Blocklibelle ausgebildet ist - stattfinden.

Es ist vorgesehen dass, die Libelle frei von Markierungsringen ausgebildet ist.

Es ist vorgesehen, dass der zweite und der dritte Bereich als abgedunkelter Bereich ausgebildet sind. Somit ist der Markierkörper im nivellierten Zustand der Libelle sowohl bei Dosenlibellen als auch bei Block- und Röhrenlibellen gut sichtbar.

Als besonders vorteilhaft hat es sich dabei herausgestellt, wenn der abgedunkelte Bereich zumindest teilweise - vorzugsweise im Wesentlichen vollständig - an der dem Hohlraum zugewandten Fläche des Körpers ausgebildet ist.

Gemäß einem bevorzugten Ausführungsbeispiel kann vorgesehen sein, dass der abgedunkelte Bereich zumindest teilweise - vorzugsweise im Wesentlichen vollständig - im Inneren des Körpers ausgebildet ist.

Als vorteilhaft hat es sich weiters herausgestellt, dass der abgedunkelte Bereich zumindest teilweise - vorzugsweise im Wesentlichen vollständig - an der Außenfläche des Körpers ausgebildet ist.

Als vorteilhaft hat es sich herausgestellt, wenn der zweite Bereich sich im Wesentlichen bis zum Ende des Hohlraumes erstreckt oder dass der zweite und der dritte Bereich sich im Wesentlichen bis zum Ende des Hohlraumes erstrecken.

Bevorzugt kann weiters vorgesehen sein, dass der zweite Bereich sich im Wesentlichen bis zum Ende des Körpers erstreckt oder dass der zweite und der dritte Bereich sich im Wesentlichen bis zum Ende des Körpers erstrecken.

Gemäß einem möglichen Ausführungsbeispiel kann vorgesehen sein, dass der abgedunkelte Bereich zumindest teilweise - vorzugsweise im Wesentlichen vollständig - aus einem farbgebenden Beschichtungsstoff - vorzugsweise aus Tinte, Lack, Kunststoff, Metall oder einer Metalllegierung - ausgebildet ist.

Gemäß einem bevorzugten Ausführungsbeispiel kann vorgesehen sein, dass der abgedunkelte Bereich zumindest zwei unterschiedliche Farbbereiche aufweist.

Günstigerweise sind die beiden Farbbereiche als übereinanderliegende Farbschichten an der dem Hohlraum zugewandten Fläche des Körpers ausgebildet, wobei eine Farbschicht als Innenschicht und eine Farbschicht als Außenschicht ausgebildet ist.

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert.

Darin zeigen:
- Fig. 1: eine perspektivische Darstellung einer Blocklibelle nach dem Stand der Technik,
- Fig. 2: eine perspektivische Darstellung einer Blocklibelle mit zwei abgedunkelten Bereichen,
- Fig. 3: eine perspektivische Darstellung einer Blocklibelle mit zwei abgedunkelten Bereichen und mit zwei Markierungsringen,
- Fig. 4: eine perspektivische Darstellung einer Blocklibelle mit einem abgedunkelten Bereich,
- Fig. 5: eine perspektivische Darstellung einer Blocklibelle zur vertikalen Messung nach dem Stande der Technik,
- Fig. 6: eine perspektivische Darstellung einer Blocklibelle zur vertikalen Messung mit zwei abgedunkelten Bereichen,
- Fig. 7: eine perspektivische Darstellung einer Röhrenlibelle nach dem Stande der Technik,
- Fig. 8: eine perspektivische Darstellung einer Röhrenlibelle mit zwei abgedunkelten Bereichen,
- Fig. 9: eine perspektivische Darstellung einer Röhrenlibelle mit zwei abgedunkelten Bereichen und zwei Markierungsringen,
- Fig. 10: eine perspektivische Darstellung einer Röhrenlibelle mit einem abgedunkelten Bereich,
- Fig. 11: eine perspektivische Darstellung einer Dosenlibelle nach dem Stande der Technik,
- Fig. 12: eine perspektivische Darstellung einer Dosenlibelle mit einem abgedunkelten Bereich,
- Fig. 13: eine perspektivische Darstellung einer Dosenlibelle mit einem abgedunkelten Bereich und einem Markierungsring,
- Fig. 14: eine perspektivische Darstellung einer Wasserwaage mit zwei Libellen nach dem Stande der Technik,
- Fig. 15: eine perspektivische Darstellung einer Wasserwaage mit zwei Blocklibellen mit je zwei abgedunkelten Bereichen,
- Fig. 16: eine perspektivische Darstellung einer Wasserwaage mit zwei Blocklibellen mit je zwei abgedunkelten Bereichen und mit je zwei Markierungsringen, und
- Fig. 17: eine perspektivische Darstellung einer Wasserwaage mit zwei Blocklibellen mit je einem abgedunkelten Bereich.

In den folgenden speziellen Ausführungsbeispielen ist der Markierkörper 4 als Blase ausgebildet. Ebenso könnte der Markierkörper 4 auch als fester Körper oder als weitere Flüssigkeit ausgebildet sein. Um einen für den Fachmann praktischen Begriff für den Markierkörper 4 zur Verfügung zu haben wird dieser in der Figurenbeschreibung als Blase 4 bezeichnet. Dies ist nicht als Einschränkung zu sehen.

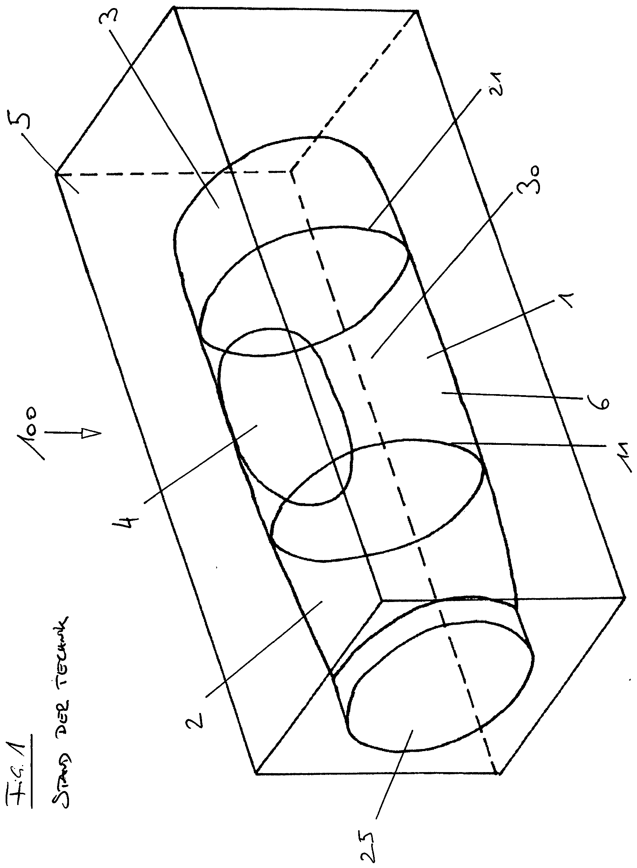

Figur 1 zeigt eine Libelle 100 - in diesem Fall eine Blocklibelle - nach dem Stande der Technik. Diese Blocklibelle 100 weist einen Körper 5 auf. Im Körper 5 ist ein Hohlraum 6 ausgebildet. In diesem Hohlraum 6 befindet sich die Flüssigkeit 30. Der Hohlraum 6 wird jedoch nicht vollständig von der Flüssigkeit 30 ausgefüllt, sondern es verbleibt die Blase 4 im Hohlraum 6. Verschlossen ist der Hohlraum 6 mit dem Verschlussdeckel 25. Die Libelle 100 befindet sich im nivellierten Zustand, wenn die Blase 4 sich im mittleren Bereich 1 befindet und sie befindet sich im nichtnivellierten Zustand, wenn sich die Blase 4 - sei es auch nur zumindest teilweise - in den Bereichen 2 oder 3 befindet. Im Stand der Technik ist es zur Feststellung des nivellierten Zustandes absolut erforderlich, dass die Libelle 100 Markierungsringe 11 und 21 aufweist.

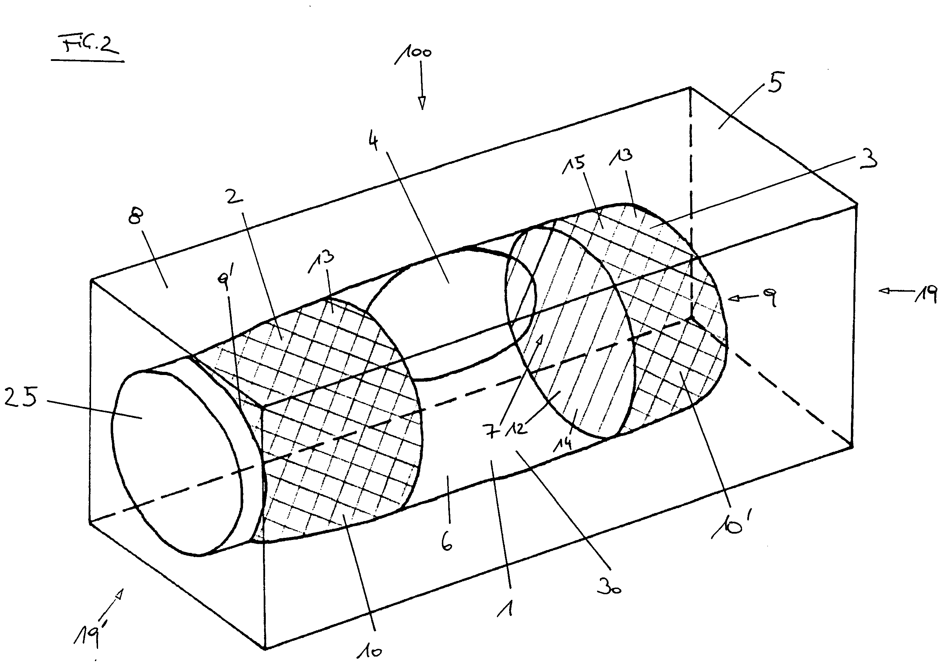

Figur 2 zeigt eine Blocklibelle 100 mit einem Körper 5 und einem im Körper 5 ausgebildeten Hohlraum 6. Im Hohlraum 6 befindet sich wiederum die Flüssigkeit 30, welche den Hohlraum 6 nicht vollständig ausfüllt, sondern die Blase 4 darin übrig bleibt. Verschlossen ist der Hohlraum 6 wiederum mit dem Verschlussdeckel 25.

In diesem Ausführungsbeispiel weisen die Bereiche 2 und 3 abgedunkelte Bereiche 10 und 10' (beziehungsweise Abdunkelungen 10, 10') auf. Durch diese abgedunkelten Bereiche 10 und 10' an dem zweiten Bereich 2 und dem dritten Bereich 3 wird nun erkennbar, wenn sich die Blase 4 nicht im ersten Bereich 1 befindet und sich somit die Libelle 100 im nichtnivellierten Zustand befindet, da die Blase 4 dann teilweise (oder gar nicht) gut sichtbar ist. Es sind keine Markierungsringe vorgesehen.

Die abgedunkelten Bereiche 10 und 10' sind dabei partiell lichtdurchlässig ausgebildet, was bewirkt, dass, wenn sich die Blase 4 zumindest teilweise in den abgedunkelten Bereichen 10 oder 10' befindet, immer noch - und sei es auch nur angedeutet - sichtbar ist. Sowohl der zweite Bereich 2 als auch der dritte Bereich 3 grenzen unmittelbar an den ersten Bereich 1 an und weisen eine Breite auf, die zumindest einem Viertel - insbesondere einem Drittel - der Breite des ersten Bereichs entspricht. Sowohl der zweite Bereich 2 und auch der dritte Bereich 3 sind in diesem bevorzugten Beispiel als abgedunkelter Bereich 10 und 10' ausgebildet. Ebenso wäre es natürlich vorstellbar, alle drei Bereiche 1, 2 und 3 abgedunkelt auszubilden. So könnten zum Beispiel die Bereich 2 und 3 unterschiedlich zum Bereich 1 abgedunkelt ausgebildet sein, wie etwa in dem eine Farbe für die Bereiche 2 und 3 wählt und eine weitere Farbe für den Bereich 1.

Dabei sind die abgedunkelten Bereiche 10 und 10' zumindest teilweise - vorzugsweise im Wesentlichen vollständig - an der dem Hohlraum 6 zugewandten Fläche 7 des Körpers 5 ausgebildet. Die abgedunkelten Bereiche 10 und 10' könnten sich auch im Inneren des Körpers 5 befinden. Ebenso könnten sie natürlich auch an der Außenfläche 8 des Körpers 5 ausgebildet werden.

Die abgedunkelten Bereiche 10 und 10' erstrecken sich in diesem Ausführungsbeispiel im Wesentlichen bis zu den Enden 9 und 9' des Hohlraumes 6. Ebenso könnten sich natürlich die abgedunkelten Bereiche 10 und 10' im Wesentlichen bis zum Ende 19 und 19' des Körpers 5 erstrecken, wenn diese im Inneren oder an der äußeren Fläche 8 des Körpers ausgebildet wären. Weiters wäre es auch vorstellbar, die abgedunkelten Bereiche 10 und 10' nur als Streifen, angrenzend an den benachbarten Bereich 1, auszubilden. In der Praxis hat sich gezeigt, dass der positive Ableseeffekt bereits ab einer Streifenbreite des abgedunkelten Bereiches 10 und 10' von etwa 2 mm auftreten kann, bevorzugt sind jedoch größere Breiten. Bei einer Blocklibelle 100 mit einem ersten Bereich 1 von etwa 13 mm hat sich herausgestellt, dass abgedunkelte Bereiche 10 und 10' mit einer Breite ab etwa 3 mm angenehm ablesbar sind. Noch besser ablesbar sind jedoch Libellen 100 mit breiteren abgedunkelten Bereichen 10 und 10', wie etwa mit einer Breite von 5 mm.

In diesem bevorzugten Ausführungsbeispiel sind die abgedunkelten Bereiche 10 und 10' aus einem farbgebenden Beschichtungsstoff - hier im Speziellen aus Tinte - ausgebildet. Es wären natürlich auch andere chemische Produkte, wie etwa Lacke, geeignet um zum Einsatz zu gelangen. Ebenso wäre natürlich auch jede andere Art zur Herstellung eines abgedunkelten Bereiches 10 bzw. 10' vorstellbar, wie etwa durch die durch das Anbringen eines Stahleinsatzes oder durch das Einkleben von Etiketten oder Ähnlichem. Ebenso könnten Prägebänder oder Kunststoffeinlagen angeordnet werden, weiters wäre auch vorstellbar, dass z.B. Kunststoff eingespritzt wird oder die dunklen Bereiche 10 und 10' durch Insert Molding erstellt werden.

Eine einfache Methode wäre auch, eine Hülse bzw. Kappe, bevorzugterweise zwei Hülsen bzw. zwei Kappen über die Bereiche 2 und 3 der Libelle 100 zu stülpen, um somit abgedunkelte Bereiche 10, 10' zu erzielen.

Auch die Anbringung einer Folie oder eines textilen Flächengebildes kann als Möglichkeit in Betracht gezogen werden, um abgedunkelte Bereiche 10 und 10' herzustellen.

In diesem Ausführungsbeispiel weisen die abgedunkelten Bereiche 10 und 10' zwei unterschiedliche Farbbereiche 12 und 13 auf. Dadurch wird für den Ableser ermöglicht, leichter einen parallaxen Ablesefehler zu detektieren, da eine innere Farbschicht 14 nur dann ersichtlich ist, wenn der Betrachter nicht senkrecht die Libelle 100 betrachtet. Die beiden Farbbereiche 12 und 13 sind dabei als übereinanderliegende Farbschichten 14 und 15 an der dem Hohlraum 6 zugewandten Fläche 7 des Körpers 5 ausgebildet, wobei - wie bereits erwähnt - die Farbschicht 14 als Innenschicht und die Farbschicht 15 als Außenschicht ausgebildet ist.

In einem weiteren Ausführungsbeispiel kann vorgesehen sein, dass mindestens einer der Teile zumindest teilweise fluoreszierend oder phosphoreszierend ausgebildet ist, wie etwa:
- der Körper 5 der Libelle 100,
- der Verschlussdeckel 25 des Hohlraumes 6,
- die Flüssigkeit 30 im Hohlraum 6 des Körpers 5,
- der Markierkörper 4.

Im Detail könnten diese zumindest teilweise fluoreszierenden oder phosphoreszierenden Teile sein:
- der erste Bereich 1,
- der zweite Bereich 2,
- der dritte Bereich 3,
- der Markierkörper 4,
- die dem Hohlraum 6 zugewandten Fläche 7 des Körpers 5,
- wenigstens ein Markierungsring 11, 21,
- wenigstens ein Farbbereich 12, 13,
- die Außenfläche 8 des Körpers 5.

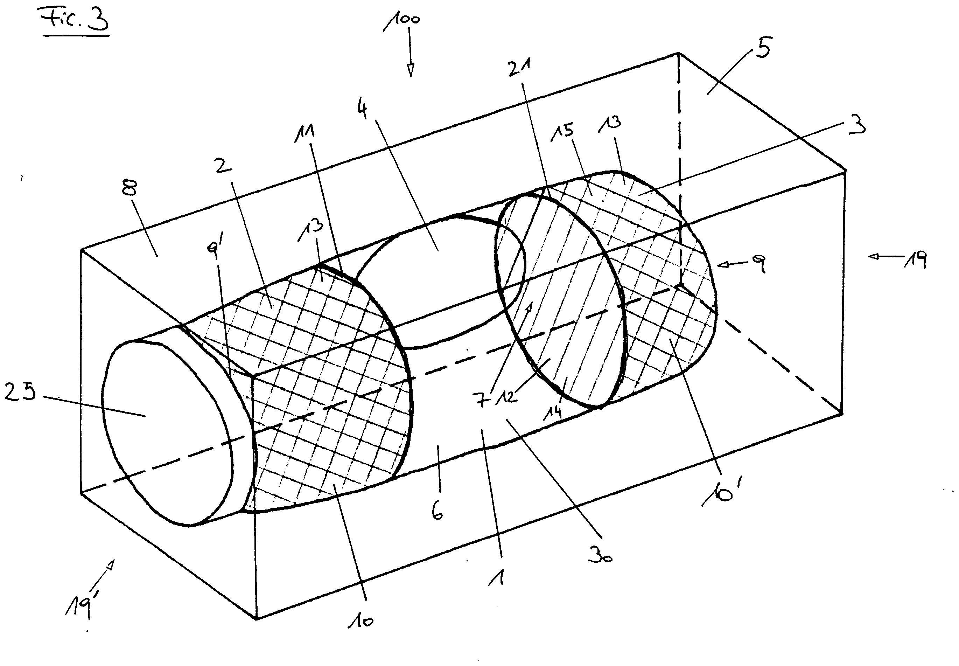

Figur 3 (nicht Teil der Erfindung) zeigt eine Blocklibelle 100, wie eben unter Figur 2 beschrieben, mit dem einzigen Unterschied, dass diese weiters über zwei Markierungsringe 11 und 21 verfügt. Ansonsten gilt sinngemäß alles, was bei der Figurenbeschreibung der Figur 2 erwähnt wurde.

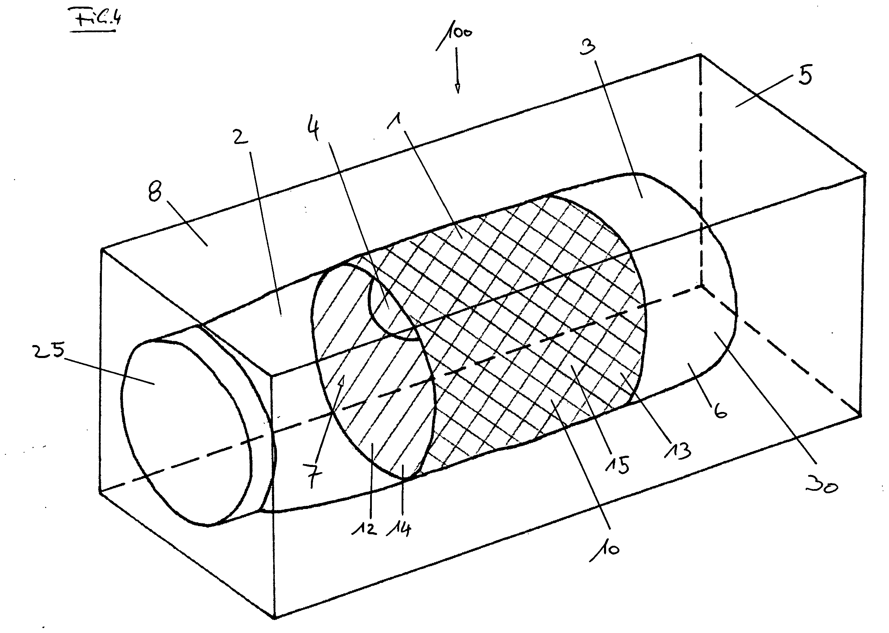

Figur 4 (nicht Teil der Erfindung) zeigt eine Blocklibelle 100 mit einer Blase 4 und einem ersten Bereich 1, wobei sich die Blase 4 im nivellierten Zustand der Libelle 100 im ersten Bereich 1 befindet und einem zweiten Bereich 2, wobei der zweite Bereich 2 unmittelbar an den ersten Bereich 1 angrenzt und eine Breite aufweist, die zumindest einem Viertel - insbesondere einem Drittel - der Breite des ersten Bereiches 1 entspricht, wobei in diesem Ausführungsbeispiel der erste Bereich 1 abgedunkelt 10 ausgebildet ist.

Durch eine derartige Ausbildung wird also die Blase 4 für den Betrachter nur dann gut sichtbar, wenn sich die Libelle 100 im nichtnivellierten Zustand befindet und die Enden der Blase 4 sich in den zweiten Bereich 2 oder den dritten Bereich 3 erstrecken.

Im nivellierten Zustand dieser Libelle 100 ist also die Blase 4 nicht bzw. nur eingeschränkt erkennbar. Über die Ausgestaltung des abgedunkelten Bereiches bezüglich Lichtdurchlässigkeit, unterschiedlicher Farbbereiche und Material und Ähnlichem gilt natürlich alles, was auch zu der Figurenbeschreibung der Figur 2 erwähnt wurde.

In diesem Ausführungsbeispiel verfügt die Libelle 100 über keine Markierungsringe.

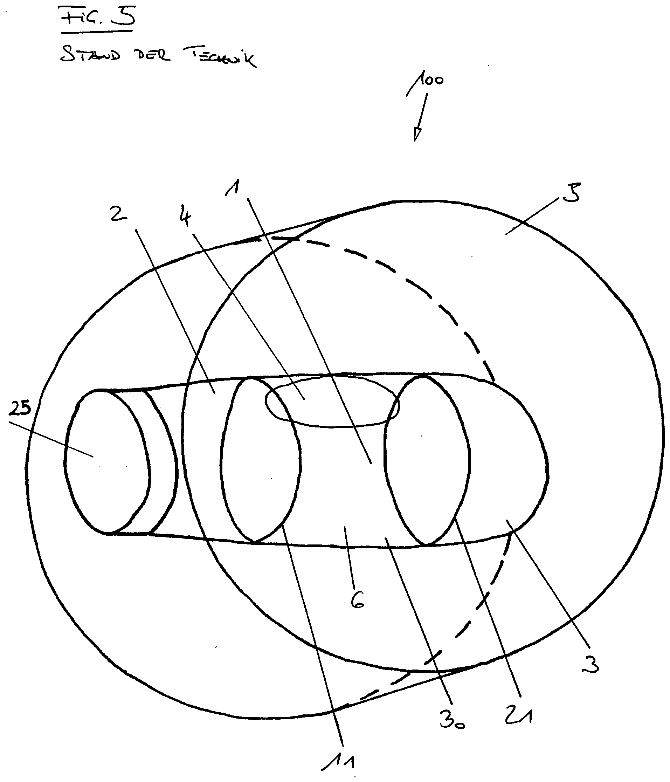

Figur 5 zeigt eine Blocklibelle 100 nach dem Stande der Technik, wobei diese Blocklibelle 100 zur Messung der Vertikalen mit einer nicht dargestellten Wasserwaage 110 angedacht ist, im Gegensatz zu der in der Figur 1 dargestellten Libelle 100, die zu einer der dort ebenfalls nicht dargestellten Wasserwaage 110 Messung der Horizontalen angedacht ist. Ansonsten gilt, was unter der Figurenbeschreibung der Figur 1 erwähnt wurde.

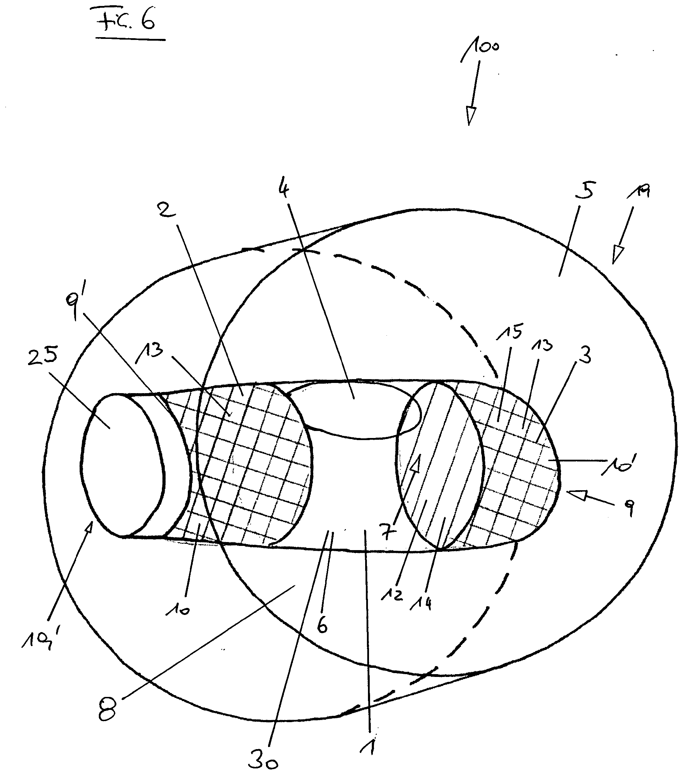

Figur 6 zeigt eine Blocklibelle 100 für den Einsatz in einer nicht dargestellten Wasserwaage 110 zur Messung der vertikalen Ausrichtung.

Für diese Libelle 100 gilt ebenso, was in der Beschreibung der Figur 2 erwähnt wurde.

Die hier dargestellte Libelle 100 weist keine Markierungsringe auf.

Der abgedunkelte Bereich 10 könnte sich auch - wie in Figur 4 erwähnt - im ersten Bereich 1 befinden und nicht - wie in dieser Figur 6 dargestellt - im zweiten Bereich 2 und im dritten Bereich 3.

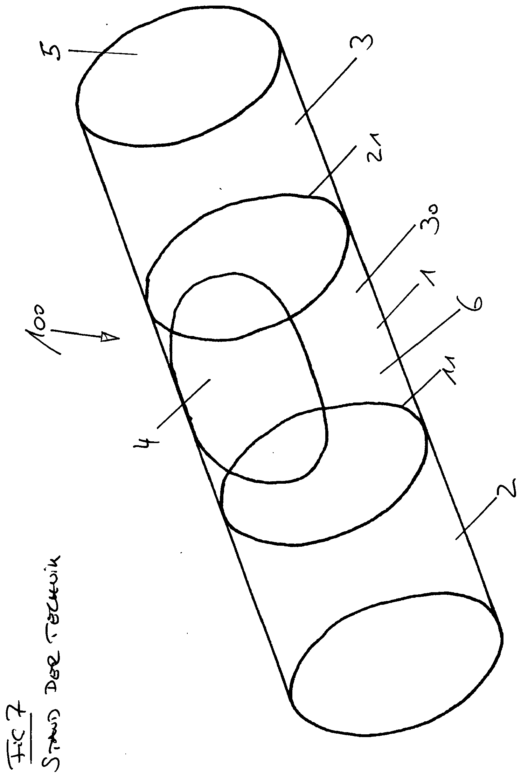

Figur 7 zeigt eine Röhrenlibelle in perspektivischer Darstellung nach dem Stande der Technik. Diese weist einen etwas anders gestalteten Körper 5 als die in Figur 1 dargestellte Blocklibelle 100 auf. Ansonsten gilt bezüglich dieser in Figur 7 dargestellten Röhrenlibelle 100 sinngemäß das gleiche wie das zu der Blocklibelle 100 in Figur 1 erwähnte.

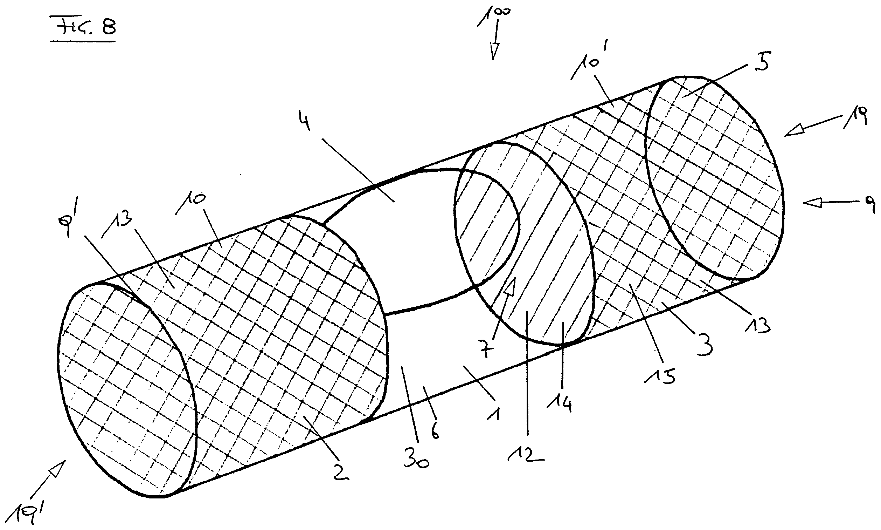

Figur 8 zeigt eine Libelle 100, in diesem Fall eine Röhrenlibelle - mit abgedunkelten Bereichen 10 und 10' in dem zweiten Bereich 2 bzw. dem dritten Bereich 3 der Röhrenlibelle 100. Im nivellierten Zustand befindet sich wiederum die Blase 4 im ersten Bereich 1. Für diese Röhrenlibelle 100 ist die Beschreibung der in Figur 2 dargestellten Blocklibelle 100 ebenfalls sinngemäß zutreffend.

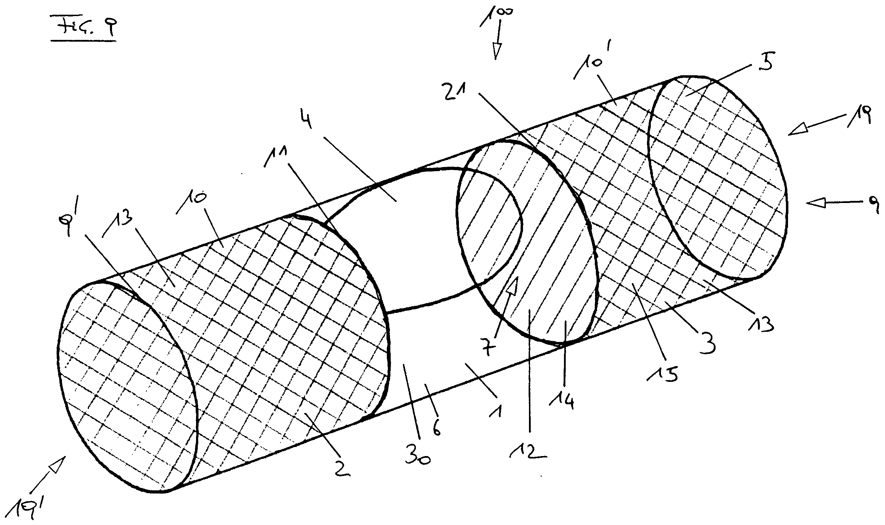

Figur 9 (nicht Teil der Erfindung) zeigt eine Röhrenlibelle 100, wie unter Figur 8 dargestellt, mit dem einzigen Unterschied, dass diese weiters über zwei Markierungsringe 11 und 21 verfügt.

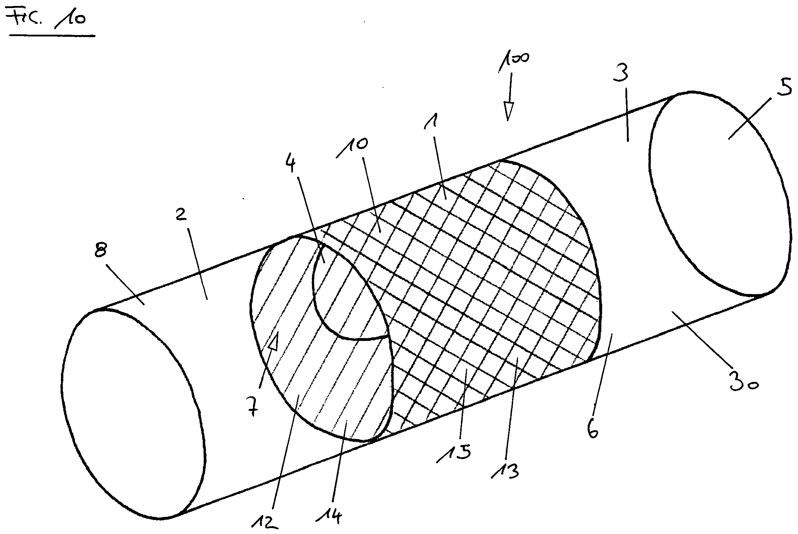

Figur 10 (nicht Teil der Erfindung) zeigt eine Röhrenlibelle 100, bei der der abgedunkelte Bereich 10 im ersten Bereich 1 ausgebildet ist. Auch hier gilt das bezüglich der Blocklibelle 100 in Figur 4 erwähnte.

In diesem hier dargestellten Ausführungsbeispiel weist die Röhrenlibelle 100 keine Markierungsringe auf.

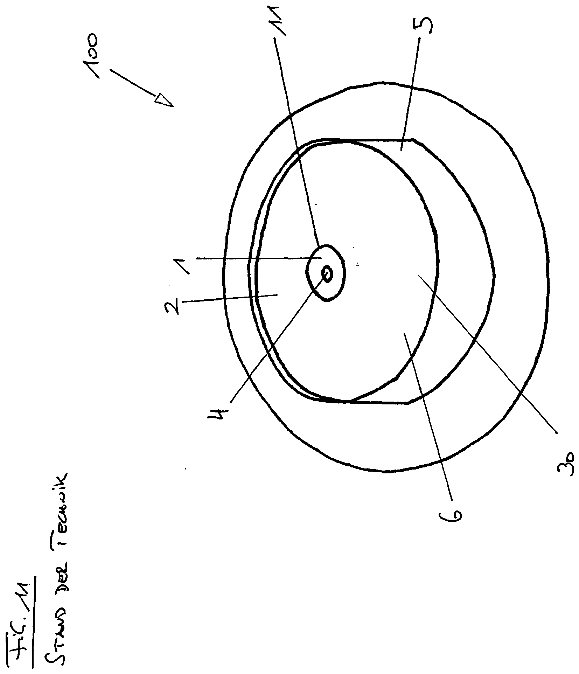

Figur 11 zeigt eine perspektivische Darstellung einer Dosenlibelle 100 nach dem Stande der Technik. Die Dosenlibelle 100 weist eine Blase 4 auf, wobei sich die Blase 4 in einem ersten Bereich 1 befindet, wenn die Libelle 100 sich im nivellierten Zustand befindet. Außerhalb des ersten Bereiches 1 befindet sich der zweite Bereich 2, wobei der zweite Bereich 2 unmittelbar an den ersten Bereich 1 angrenzt und eine Breite aufweist, die zumindest einem Drittel, insbesondere der Hälfte der Breite des ersten Bereiches 1 entspricht. Beim ersten Bereich 1 ist dabei noch weiters der Markierungsring 11 ausgebildet. Die Dosenlibelle 100 weist einen Körper 5 auf, wobei in dem Körper 5 ein Hohlraum 6 ausgebildet ist, welcher teilweise - bis auf die Blase 4 - mit der Flüssigkeit 30 befüllt ist.

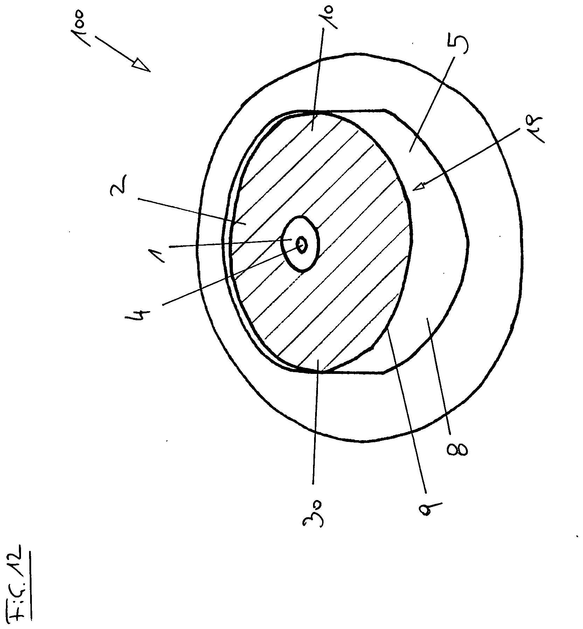

Figur 12 (nicht Teil der Erfindung) zeigt eine Dosenlibelle 100 mit einer Blase 4 und einem ersten Bereich 1, wobei sich die Blase 4 im nivellierten Zustand der Libelle 100 im ersten Bereich 1 befindet und einem zweiten Bereich 2, wobei der zweite Bereich 2 unmittelbar an den ersten Bereich 1 angrenzt und eine Breite aufweist, die zumindest einem Viertel - insbesondere einem Drittel - der Breite des ersten Bereiches 1 entspricht, wobei in diesem Ausführungsbeispiel der zweite Bereich 2 abgedunkelt 10 ausgebildet ist. Ebenso könnte natürlich auch der Bereich 1 als abgedunkelter Bereich 10 ausgebildet sein.

Der zweite Bereich 2 umschließt dabei im Wesentlichen vollständig den ersten Bereich 1.

Über die Ausbildung des abgedunkelten Bereiches 10 gilt an sich sinngemäß das unter der Figurenbeschreibung der Figur 2 erwähnte, mit dem Unterschied, dass nur ein abgedunkelter Bereich 10 ausgebildet ist.

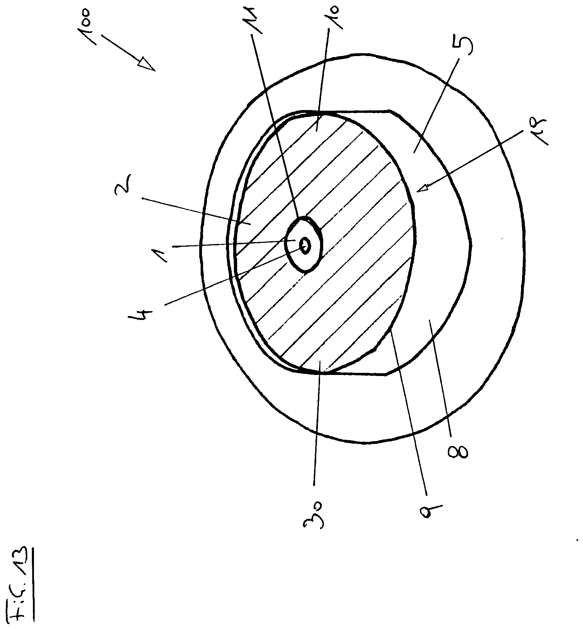

Figur 13 (nicht Teil der Erfindung) zeigt eine Dosenlibelle 100, wie in der Figur 12 dargestellt, mit dem einzigen Unterschied, dass diese in Figur 13 dargestellte Dosenlibelle 100 über einen Markierungsring 11 verfügt.

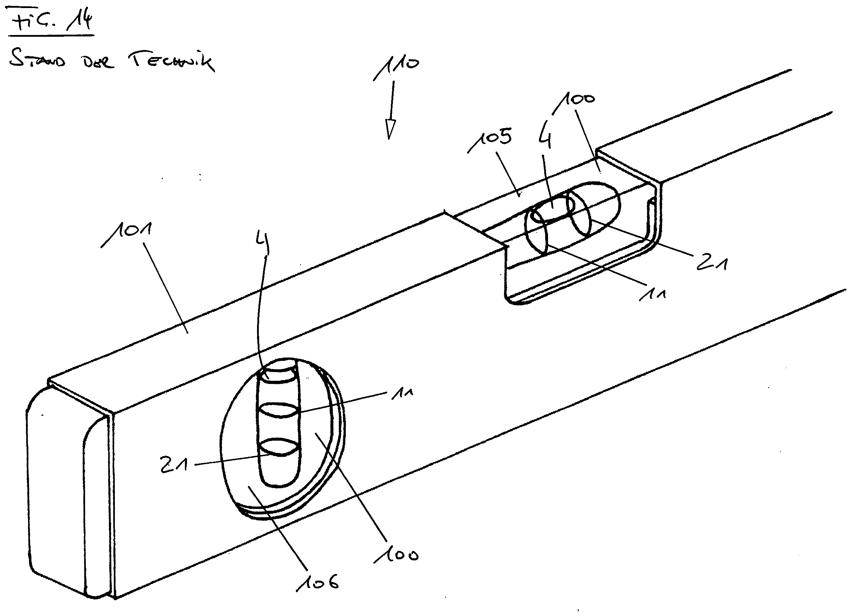

Figur 14 zeigt eine perspektivische Darstellung einer Wasserwaage 110 nach dem Stande der Technik. Diese Wasserwaage 110 weist einen Profilkörper 101 auf, in dem zwei Libellen 100 angeordnet sind. Dabei ist eine Libelle 100 als Horizontallibelle 105 ausgebildet und die zweite Libelle 100 als Vertikallibelle 106 ausgebildet.

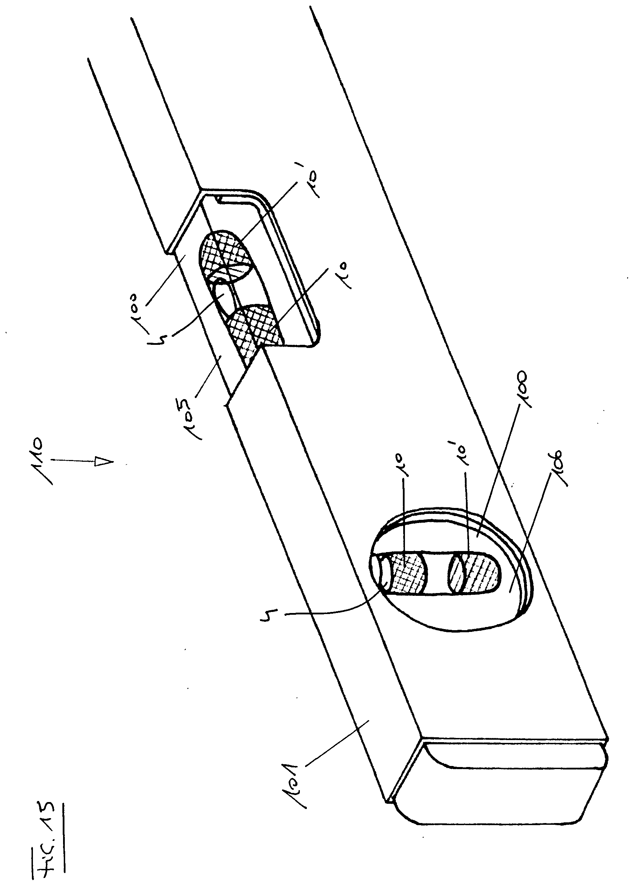

Figur 15 zeigt eine Wasserwaage 110 mit einem Profilkörper 101 und im Profilkörper 101 angeordneten Libellen 100.

Dabei ist wiederum eine Libelle 100 als Vertikallibelle 106 ausgebildet und die zweite Libelle 100 als Horizontallibelle 105. Beide Libellen 100 weisen in diesem Ausführungsbeispiel abgedunkelte Bereiche 10 und 10' auf (Beschreibung der vertikalen Blocklibelle - siehe Figurenbeschreibung der Figur 6 - und Beschreibung der horizontalen Blocklibelle - siehe Figurenbeschreibung der Figur 2).

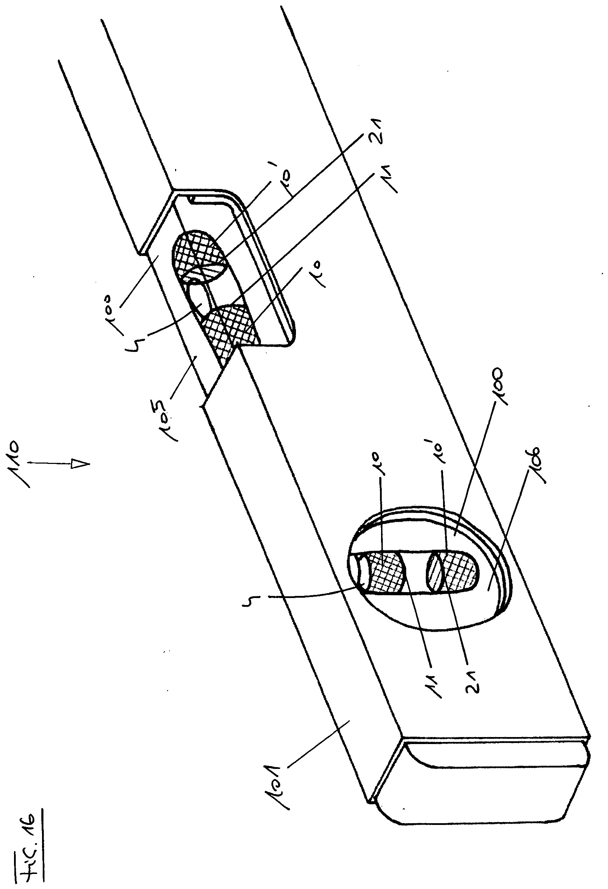

Figur 16 (nicht Teil der Erfindung) zeigt eine Wasserwaage 110, wie eben unter Figur 15 beschrieben, mit dem einzigen Unterschied, dass die Libellen 100 dabei Markierungsringe 11 und 21 aufweisen.

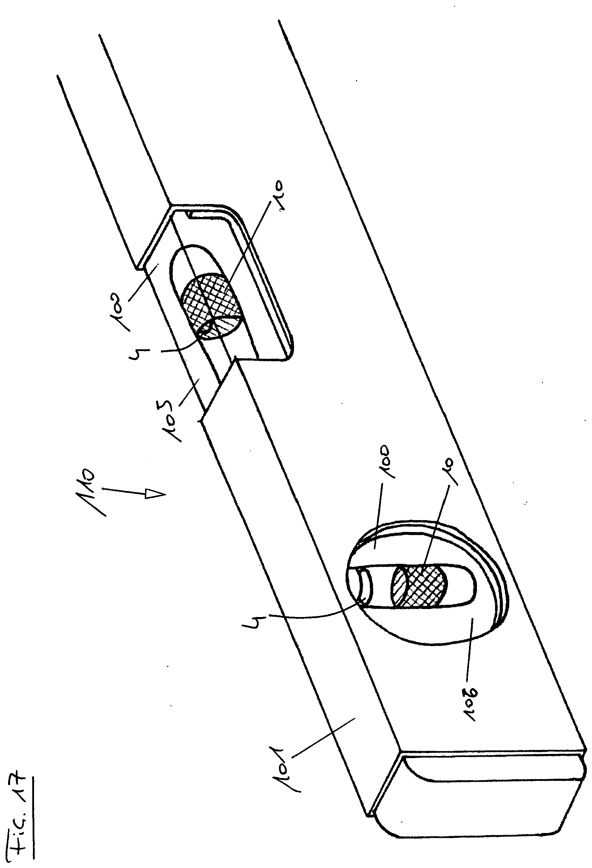

Figur 17 (nicht Teil der Erfindung) zeigt eine Wasserwaage 110 und Libellen 100, die einen abgedunkelten Bereich 10 im ersten Bereich 1 der Libellen 100 aufweisen, bezüglich der horizontalen Blocklibelle 105 gilt das in der Figurenbeschreibung der Figur 4 erwähnte und ist weiters für die Beschreibung der vertikalen Blocklibelle 106 sinngemäß anwendbar.

## Patentansprüche

1. Wasserwaage (110) mit einem Profilkörper (101) und einer in den Profilkörper (101) eingesetzten Libelle (100), insbesondere Blocklibelle, wobei die Libelle (100) aufweist:
- einen Markierkörper (4) - insbesondere eine Blase,
- einen ersten Bereich (1), wobei sich der Markierkörper (4) im nivellierten Zustand der Libelle (100) im ersten Bereich (1) befindet
- einen zweiten Bereich (2), wobei der zweite Bereich (2) unmittelbar an den ersten Bereich (1) angrenzt und eine Breite aufweist, die zumindest einem Viertel der Breite des ersten Bereiches (1) entspricht
- einen dritten Bereich (3), wobei der dritte Bereich (3) eine Breite aufweist, die zumindest einem Viertel der Breite des ersten Bereiches (1) entspricht
und wobei der zweite Bereich (2) und der dritte Bereich (3) abgedunkelt (10), nämlich lichtundurchlässig oder transluzent, ausgebildet sind, und wobei die Libelle (100) so in den Profilkörper (101) eingesetzt ist, dass der zweite Bereich (2) und der dritte Bereich (3) für einen Betrachter erkennbar sind, **dadurch gekennzeichnet, dass**
- die Libelle (100) keinen Markierungsring (11, 21) aufweist und dass
- der zweite Bereich (2) und der dritte Bereich (3) unmittelbar an den ersten Bereich (1) angrenzen und sich der Markierkörper (4) außerhalb des nivellierten Zustandes der Libelle (100) zumindest teilweise im zweiten Bereich (2) oder im dritten Bereich (3) befindet und dadurch der Markierkörper (4) außerhalb des nivellierten Zustandes der Libelle (100) teilweise sichtbar ist, sodass es für einen Betrachter leichter erkennbar ist, ob sich der Markierkörper (4) gänzlich im ersten Bereich (1) befindet und somit sich die Libelle (100) im nivellierten Zustand befindet, wobei eine genau ausnivellierte Libelle (100) sicherstellt, dass sich der Markierkörper (4) gänzlich im ersten Bereich (1) befindet.

2. Wasserwaage nach Anspruch 1, **dadurch gekennzeichnet, dass** der zweite Bereich (2) eine Breite aufweist, die zumindest einem Drittel der Breite des ersten Bereiches (1) entspricht.

3. Wasserwaage nach einem der Ansprüche 1 bis 2, **dadurch gekennzeichnet, dass** der dritte Bereich (3) eine Breite aufweist, die zumindest einem Drittel der Breite des ersten Bereiches (1) entspricht.

4. Wasserwaage nach einem der Ansprüche 1 bis 3, wobei die Libelle (100) einen Körper (5) und einen im Körper (5) befindlichen Hohlraum (6) aufweist, **dadurch gekennzeichnet, dass** der abgedunkelte Bereich (10, 10') zumindest teilweise - vorzugsweise im Wesentlichen vollständig - an der dem Hohlraum (6) zugewandten Fläche (7) des Körpers (5) ausgebildet ist.

5. Wasserwaage nach einem der Ansprüche 1 bis 4, **dadurch gekennzeichnet, dass** der abgedunkelte Bereich (10, 10') zumindest teilweise - vorzugsweise im Wesentlichen vollständig - im Inneren des Körpers (5) ausgebildet ist.

6. Wasserwaage nach einem der Ansprüche 1 bis 5, **dadurch gekennzeichnet, dass** der zweite Bereich (2) sich im Wesentlichen bis zum Ende (9) des Hohlraumes (6) erstreckt oder dass der zweite (2) und der dritte Bereich (3) sich im Wesentlichen bis zum Ende (9, 9') des Hohlraumes (6) erstrecken.

7. Wasserwaage nach einem der Ansprüche 1 bis 6, **dadurch gekennzeichnet, dass** der abgedunkelte Bereich (10, 10') zumindest teilweise - vorzugsweise im Wesentlichen vollständig - aus einem farbgebenden Beschichtungsstoff - vorzugsweise aus Tinte, Lack, Kunststoff, Metall oder einer Metalllegierung - ausgebildet ist.

8. Wasserwaage nach einem der Ansprüche 1 bis 7, **dadurch gekennzeichnet, dass** der abgedunkelte Bereich (10, 10') zumindest zwei unterschiedliche Farbbereiche (12, 13) aufweist.

9. Wasserwaage nach einem der Ansprüche 1 bis 8, **dadurch gekennzeichnet, dass** mindestens einer der Teile zumindest teilweise fluoreszierend oder phosphoreszierend ausgebildet ist:
- der Körper (5) der Libelle (100),
- ein Verschlussdeckel (25) des Hohlraumes (6),
- eine Flüssigkeit (30) im Hohlraum (6) des Körpers (5),
- der Markierkörper (4).

## Claims

1. A spirit level (110) having a profile body (101) and a vial (100) inserted into the profile body (101), in particular a block vial, the vial (100) comprising:
- a marker body (4) - in particular a bubble,
- a first region (1), wherein the marker body (4) is in the first region (1) in a levelled condition of the vial (100),
- a second region (2), wherein the second region (2) directly adjoins the first region (1) and is of a width which corresponds to at least a quarter of the width of the first region (1)
- a third region (3), wherein the third region (3) is of a width which corresponds to at least a quarter of the width of the first region (1)
and wherein the second region (2) and the third region (3) are darkened, namely they are opaque or translucent, and wherein the vial (100) is inserted into the profile body (101) in such a way that the second region (2) and the third region (3) can be seen by a viewer, **characterized in that**
- the vial (100) does not have a marking ring (11, 21) and **in that**
- the second region (2) and the third region (3) directly adjoin the first region (1) and the marker body (4) is at least partially in the second region (2) or the third region (3) outside the levelled condition of the vial (100), thus the marker body (4) is partially visible outside the levelled condition of the vial (100) so that a viewer can more easily see whether the marker body (4) is entirely in the first region (1) and thus the vial (100) is in the levelled condition, wherein a vial (100) that is accurately leveled off ensures that the marker body (4) is disposed entirely in the first region (1).

2. A spirit level as set forth in claim 1, **characterized in that** the second region (2) is of a width which corresponds at least to a third of the width of the first region (1).

3. A spirit level as set forth in one of claims 1 to 2, **characterized in that** the third region (3) is of a width which corresponds at least to a third of the width of the first region (1).

4. A spirit level as set forth in at least one of claims 1 to 3, **characterized in that** the vial (100) has a body (5) and a cavity (6) in the body (5), **characterized in that** the darkened region (10, 10') is provided at least partially - or substantially completely - at the surface (7) of the body (5), that is towards the cavity (6).

5. A spirit level as set forth in at least one of claims 1 to 4, **characterized in that** the darkened region (10, 10') is provided at least partially - or substantially completely - in the interior of the body (5).

6. A spirit level as set forth in at least one of claims 1 to 5, **characterized in that** the second region (2) extends substantially to the end (9) of the cavity (6) or the second (2) and the third regions (3) extend substantially to the end (9, 9') of the cavity (6).

7. A spirit level as set forth in at least one of claims 1 to 6, **characterized in that** the darkened region (10, 10') is formed at least partially - preferably substantially completely - from a coloring coating material, preferably ink, varnish, plastic, metal or a metal alloy.

8. A spirit level as set forth in at least one of claims 1 to 7, **characterized in that** the darkened region (10, 10') has at least two different color regions (12, 13).

9. A spirit level as set forth in at least one of claims 1 to 8, **characterized in that** at least one of the parts is at least partially fluorescent or phosphorescent:
- the body (5) of the vial (100),
- a closure cover (25) of the cavity (6),
- a liquid (30) in the cavity (6) of the body (5),
- the marker body (4).

## Revendications

1. Niveau à bulle (110) avec un corps profilé (101) et une fiole (100) placée dans le corps profilé (101), plus particulièrement une fiole bloc, dans lequel la fiole (100) présente :
- un corps de marquage (4) - plus particulièrement une bulle d'air,
- une première zone (1), dans laquelle le corps de marquage (4) se trouve à l'état plan de la fiole (100) dans la première zone (1)
- une deuxième zone (2), la deuxième zone (2) étant directement adjacente à la première zone (1) et présentant une largeur qui correspond à au moins un quart de la largeur de la première zone (1)
- une troisième zone (3), la troisième zone (3) présentant une largeur qui correspond à au moins un quart de la largeur de la première zone (1)
et dans lequel la deuxième zone (2) et la troisième zone (3) sont conçues assombries (10), à savoir opaques ou translucides, et dans lequel la fiole (100) est placée dans le corps profilé (101) de sorte que la deuxième zone (2) et la troisième zone (3) sont reconnaissables pour un observateur, **caractérisé en ce que**
- la fiole (100) ne présente pas d'anneau de marquage (11, 21) et **en ce que**
- la deuxième zone (2) et la troisième zone (3) sont directement adjacentes à la première zone (1) et le corps de marquage (4) se trouve à l'extérieur de l'état plan de la fiole (100) au moins partiellement dans la deuxième zone (2) ou dans la troisième zone (3) et **en ce que** le corps de marquage (4) est partiellement visible à l'extérieur du niveau plan de la fiole (100), de sorte qu'un observateur peut facilement reconnaître si le corps de marquage (4) se trouve entièrement dans la première zone (1) et ainsi si la fiole (100) se trouve à l'état plan, dans lequel une fiole (100) exactement plane garantit que le corps de marquage (4) se trouve exactement dans la première zone (1).

2. Niveau à bulle selon la revendication 1, **caractérisé en ce que** la deuxième zone (2) présente une largeur qui correspond au moins à un tiers de la largeur de la première zone (1).

3. Niveau à bulle selon l'une des revendications 1 à 2, **caractérisé en ce que** la troisième zone (3) présente une largeur qui correspond à au moins un tiers de la largeur de la première zone (1).

4. Niveau à bulle selon l'une des revendications 1 à 3, dans lequel la fiole (100) présente un corps (5) et une cavité (6) se trouvant dans le corps (5), **caractérisé en ce que** la zone assombrie (10, 10') est conçue au moins partiellement - de préférence essentiellement entièrement - sur la surface (7), orientée vers la cavité (6), du corps (5).

5. Niveau à bulle selon l'une des revendications 1 à 4, **caractérisé en ce que** la zone assombrie (10, 10') est conçue au moins partiellement - de préférence essentiellement entièrement - à l'intérieur du corps (5).

6. Niveau à bulle selon l'une des revendications 1 à 5, **caractérisé en ce que** la deuxième zone (2) s'étend essentiellement jusqu'à l'extrémité (9) de la cavité (6) ou **en ce que** la deuxième (2) et la troisième zone (3) s'étendent essentiellement jusqu'à l'extrémité (9, 9') de la cavité (6).

7. Niveau à bulle selon l'une des revendications 1 à 6, **caractérisé en ce que** la zone assombrie (10, 10') est conçue au moins partiellement - de préférence essentiellement entièrement - à partir d'une matière de revêtement colorante - de préférence d'encre, de vernis, de matière synthétique, de métal ou d'un alliage métallique.

8. Niveau à bulle selon l'une des revendications 1 à 7, **caractérisé en ce que** la zone assombrie (10, 10') présente au moins deux gammes de couleur différentes (12, 13).

9. Niveau à bulle selon l'une des revendications 1 à 8, **caractérisé en ce que** au moins une des parties est conçue au moins partiellement fluorescente ou phosphorescente :
- le corps (5) de la fiole (100),
- un couvercle d'obturation (25) de la cavité (6),
- un liquide (30) dans la cavité (6) du corps (5),
- le corps de marquage (4).
